# EUROPEAN PATENT APPLICATION

(11) **EP 1 531 617 A1**
(43) Date of publication of application: **18.05.2005**
(21) Application number: 04256927.7
(22) Date of filing: 09.11.2004
(51) Int. Cl.: H04N 5/225, G02B 7/08

(54) **Image pickup apparatus and portable terminal with image pickup apparatus**

(30) Priority: 12.11.2003 JP 2003382273
(71) Applicant: Konica Minolta Opto, Inc., Hachioji-shi, Tokyo 192-8505 (JP)
(72) Inventor: Saito, Masashi, Konica Minolta Opto, Inc., Hachioji-shi Tokyo 192-8505 (JP)
(74) Representative: Rees, Alexander Ellison

(57) **Abstract**

An image pickup apparatus (100) includes an image pickup optical system (50) for conducting a subject light; an optical system support (21) for supporting the image pickup optical system; an image pickup element (8) for converting photoelectrically the subject light conducted by the image pickup optical system; an outer frame (12) for housing the optical system support; and an optical system support guide (22,23), fixed to the outer frame, supporting the optical system support slidably along an optical axis, wherein the outer frame is assembled to the image pickup element so that the outer frame is in contact with the image pickup element.

## Description

### FIELD OF THE INVENTION

The present invention relates to image pickup apparatuses and in particular to compact and thin type image pickup apparatuses which are suitable for incorporation into portable terminals and which allow the focus to be adjusted according to the distance from the subject being photographed.

### BACKGROUND OF THE INVENTION

Conventionally, small sized and thin image pickup apparatuses have come to be incorporated in small sized and thin portable terminals such as mobile or cellular telephones and PDAs (Personal Digital Assistants), and because of this, it has become possible not only to transmit audio information to distant locations but also to send video information to distant locations along with the audio information. Solid state image pickup elements such as CCD (Charge Coupled Device) type image sensors or CMOS (Complementary Metal-Oxide Semiconductor) type image sensors, etc., are being used as the image pickup elements in such image pickup apparatuses.

In such image pickup apparatuses incorporated in mobile telephones or PDAs, proposals have been made to install zoom lenses and to make macro-photography possible.

Technology has been disclosed (for example, see Patent reference document 1) that uses piezoelectric devices expanding and contracting in the direction of the optical axis as the actuators for the configuration of movement of the set of lenses for such zooming and macro-photography.

Patent reference document 1: Japanese patent application laid open No. 2002-107612.

In the image pickup apparatuses incorporated into the above portable terminals, the focal distance of the image pickup optical system has become extremely small and also the aperture is very bright with F-numbers in the range of 2 to 4 because the image pickup elements used have been made small. Therefore, the result has been that the depth of focus has become very shallow on the image pickup side, and very severe accuracies are being demanded in the amount of movement of the image pickup optical system relative to the image pickup surface, in its set position, and in the perpendicularity between the image pickup element and the optical axis.

In contrast with this, in the lens unit disclosed in Patent reference document 1, since piezoelectric devices vibrating with their drive direction being the direction of the optical axis have been placed and a shaft connected to the end surfaces of these piezoelectric devices is being made the guide shaft that is the guiding member of lens movement. It is hard to support in the fixed manner the guide shaft, and it is difficult to obtain perpendicularity of the guide shaft with respect to the image pickup surface.

Furthermore, in the image pickup apparatuses incorporated in such portable terminals, in order to reduce the thickness, the image pickup element is not packaged but is generally mounted directly on a printed circuit board in the condition of the sensor chip itself. Since the guide shaft is placed on this printed circuit board, even if the perpendicularity between the printed circuit board and the guide shaft is achieved, if the image pickup element is mounted with an inclination on the printed circuit board, there arises the problem of the perpendicularity between the image pickup element and the guide shaft being not maintained.

### SUMMARY OF THE INVENTION

With the above problem in view, an object of the present invention is to obtain an adjustable focus image pickup apparatus in which the perpendicularity between the image pickup element and the guide shaft is maintained even if the image pickup element is mounted in an inclined position on the printed circuit board, and as a consequence, in which image pickup apparatus it is possible to maintain accurately the perpendicularity between the surface of the image pickup element surface and the optical axis of the image pickup optical system.

An object of the present invention can be achieved by the following structure.

### Item 1:

An image pickup apparatus comprising an image pickup optical system for conducting a subject light, an optical system support for supporting the image pickup optical system, an image pickup element for converting photoelectrically the subject light conducted by the image pickup optical system, an outer frame for housing the optical system support and an optical system support guide, fixed to the outer frame, for supporting the optical system support slidably along an optical axis, wherein the outer frame is assembled to the image pickup element so that the outer frame is come into contact with the image pickup element.

### Item 2:

The image pickup apparatus of Item 1 further comprising a substrate on which the image pickup element is fixed.

### Item 3:

The image pickup apparatus of Item 1 or Item 2 further comprising a substrate, wherein a gap is provided between the outer frame and the substrate and the outer frame is not in contact with the substrate.

### Item 4:

The image pickup apparatus of Item 3, wherein the outer frame and the substrate are fixed together with an adhesive.

### Item 5:

The image pickup apparatus of Item 4, wherein the adhesive is one of an ultraviolet curing adhesive, a heat curing adhesive, an ultraviolet and heat curing adhesive, and an ultraviolet and moisture curing adhesive.

### Item 6:

The image pickup apparatus of any one of Items 1 - 5, wherein the optical system support is formed in one body with one of lenses which form the image pickup optical system.

### Item 7:

A portable terminal comprising the image pickup apparatus of any one of Items 1 - 6.

According to the structure in Item 1 above, by assembling so that the outer frame is in contact with the image pickup element, the optical system support guide fixed to the outer frame will always be maintained perpendicular to the image pickup element. Even when the image pickup element is mounted in an inclined position on the printed circuit board, the optical system support guide will also become inclined in accordance with the inclination of the image pickup element and hence it becomes possible to achieve perpendicularity between the surface of the image pickup element and the optical axis of the image pickup optical system.

According to the structures described in Items 2 - 5, the same effect as the structure described in Item 1 can be obtained.

Further, according to the structure described in Item 6 above, by forming the optical system support integrally with one of the lenses forming the image pickup optical system, while it becomes possible to achieve small size and cost reduction because of fewer number of intermediate components, it also becomes possible to match more accurately the parallelism between the optical system support guide and the optical axis of the image pickup system optical system.

In addition, according to the structure described in Item 7 above, by using a portable terminal equipped with one of the above image pickup apparatuses, it becomes possible to obtain a portable terminal provided with a image pickup apparatus that has the above effects of the present invention.

### BRIEF DESCRIPTION OF THE DRAWINGS

Fig. 1 is an external view of a mobile telephone unit as one example of a portable terminal provided with an image pickup apparatus according to the present invention.
Fig. 2 is a perspective view of an image pickup apparatus according to the present invention.
Fig. 3 is a cross-sectional view of the image pickup optical system of the image pickup apparatus.
Fig. 4 is a cross-sectional view of the image pickup optical system of the image pickup apparatus showing the condition in which the image pickup element is mounted in an inclined position on the printed circuit board.
Fig. 5 is a front view showing schematically the interior of the image pickup apparatus according to the present invention.
Fig. 6 is a plan view of the matching plate which is a drive direction changing mechanism.
Fig. 7 is an outline flowchart of the operations when the portable terminal containing the image pickup apparatus is set to the camera mode.
Fig. 8 is a cross-sectional view of another example of the image pickup optical system of the image pickup apparatus.
Fig. 9 is a top view of the image pickup element according to the present invention.

### DETAILED DESCRIPTION OF THE INVENTION

While the present invention is described below using a preferred embodiment, the present invention is not to be construed to be limited to the example of this preferred embodiment.

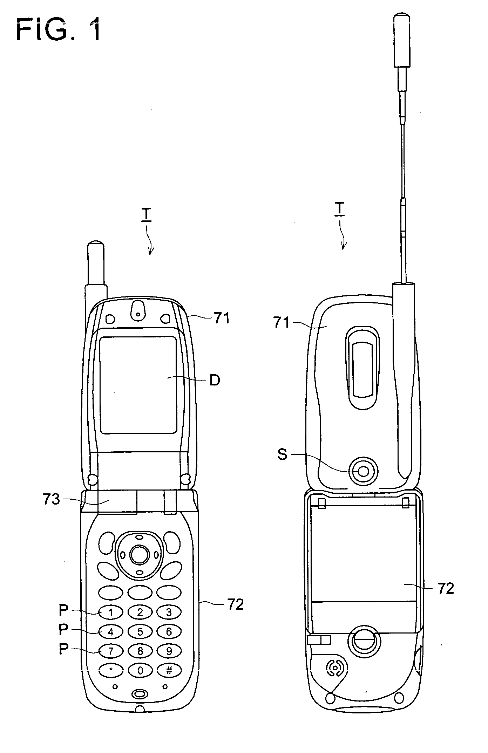

Fig. 1 is an external view showing a mobile telephone unit T which is an example of a portable terminal equipped with a image pickup apparatus according to the present invention.

The mobile telephone unit T shown in Fig. 1 includes the top chassis 71 which is a case provided with the display screen D, which top body 71 is connected by a hinge mechanism 73 to a bottom chassis 72 provided with operating buttons P. The image pickup apparatus S, in this figure, is incorporated into the top chassis 71 below the display screen D, and is placed so as to take in the light from the subject of photography from the outer surface side of the top chassis 71.

Further, the position of this image pickup apparatus S can also be such that it is placed above (on the outer surface side of) the display screen D inside the top chassis 71. In addition, the mobile telephone unit need not be restricted to be of the folding type.

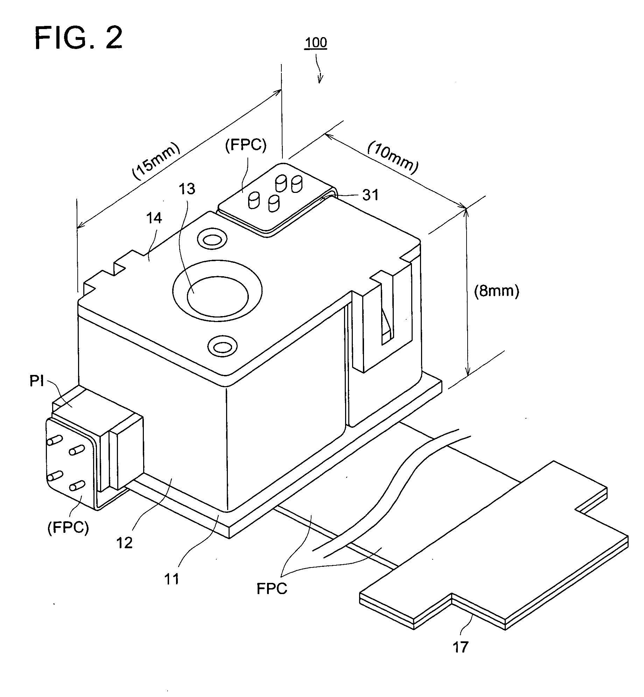

Fig. 2 is a perspective view of an image pickup apparatus according to the present invention. This image pickup apparatus 100 is incorporated at the position of the image pickup apparatus S shown in Fig. 1.

As is shown in Fig. 2, the image pickup apparatus 100 is configured from a printed circuit board 11 on which the image pickup element is mounted, an outer frame 12 that supports the image pickup element, a lid member 14 that is assembled on the top surface of this outer frame 12 and that has an opening section 13 for the light from the subject of photography to be received, a connector section 17 for connecting the image pickup apparatus 100 to the other printed circuit board of the portable terminal, and a flexible printed circuit board FPC for connecting this printed circuit board 11 to the connector section 17.

The flexible printed circuit board FPC passes through the back surface of the image pickup apparatus 100, and is also connected to the photo-interrupter PI and the stepping motor 31 (referred to hereinafter as STM) which is an actuator. In addition, a driver is mounted (not shown in the figure) that drives the photo-interrupter PI and STM 31.

In addition, as is shown in Fig. 2, this image pickup apparatus 100 is an extremely small sized one, with a thickness of about 8 mm, short side length of about 10 mm and long side length of about 15 mm.

The internal parts of the image pickup apparatus 100 are described in the following. However, in the following figures, the descriptions are made so as to avoid duplication of explanations by assigning same symbols to the same members in different figures. The image pickup apparatus 100 is confiqured using an image pickup optical system, an actuator, and a mechanism section that mechanically couples this actuator and the image pickup optical system.

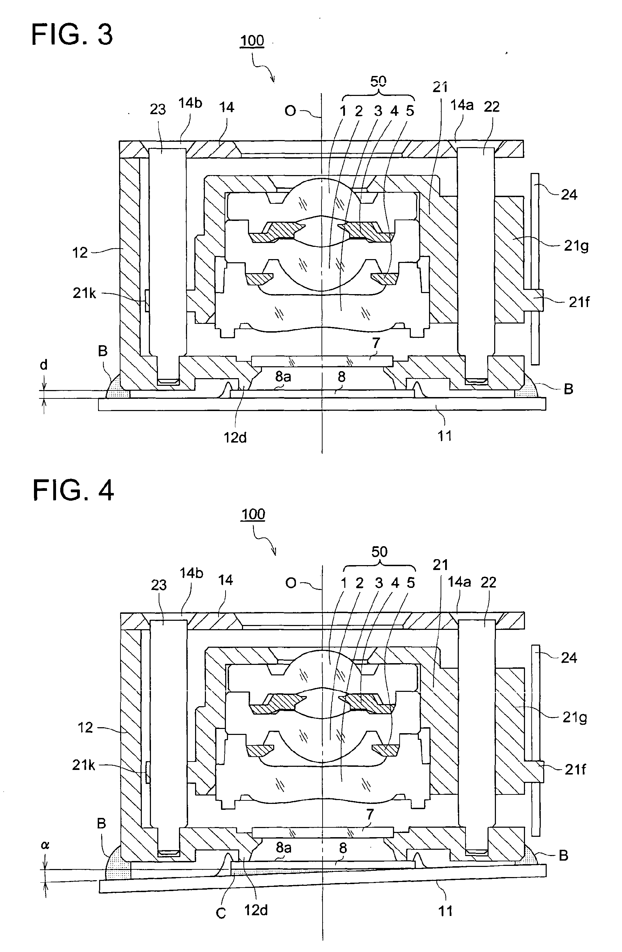

Fig. 3 is a cross-sectional view of the image pickup optical system of the image pickup apparatus. In Fig. 3, O is the optical axis, 1 is the first lens, 2 is the second lens, 3 is the third lens, 7 is the infrared filter that cuts off infrared radiation, 8 is the image pickup element, 21 is the optical system support, 22 and 23 are the optical system support guides (hereinafter referred to merely as the guide shafts) that function as the guides for movement of the optical system support 21 during movement along the direction of the optical axis.

As is shown in Fig. 3, the optical system support 21 supports the image pickup optical system 50 in its inside, with the image pickup optical system 50 being configured to comprise the first lens 1, the second lens 2, the third lens 3, the opening aperture 4, and the fixed aperture 5. In addition, the optical system support 21 is such that the guide tube 21g that mates with the guide shaft 22 and the U-shaped mating part 21k that mates with the guide shaft 23 are formed with an integral structure. Because of this, the optical system support 21 that supports the image pickup optical system 50 is formed in such manner that it can always move in a straight line in the direction of the optical axis O along the guide shafts 22 and 23.

The outer frame 12 is provided with a mounting part 12d, and the assembly is made so that the mounting part 12d is in contact with the image pickup element 8 that has been mounted on the printed circuit board 11, and the configuration is such that there is a very small gap d on the peripheral part with the printed circuit board 11. The mounting part 12d contacts with the image pickup element 8 on a part other than the surface where the photo-electric conversion is made and on the side of the photo-electric conversion surface 8a (the reference surface) of the image pickup element 8. The guide shafts 22 and 23 are supported by the outer frame 12 and the cover member 14, and are fixed by the rims 14a and 14b of the plate on the top surface of the cover member 14. Next, the printed circuit 11 is fixed by adhesive B so that the gap d on the peripheral part is filled.

For the adhesive B, adhesives including an ultraviolet curing adhesive, a heat curing adhesive, an ultraviolet and heat curing adhesive and an ultraviolet and moisture curing adhesive can be used.

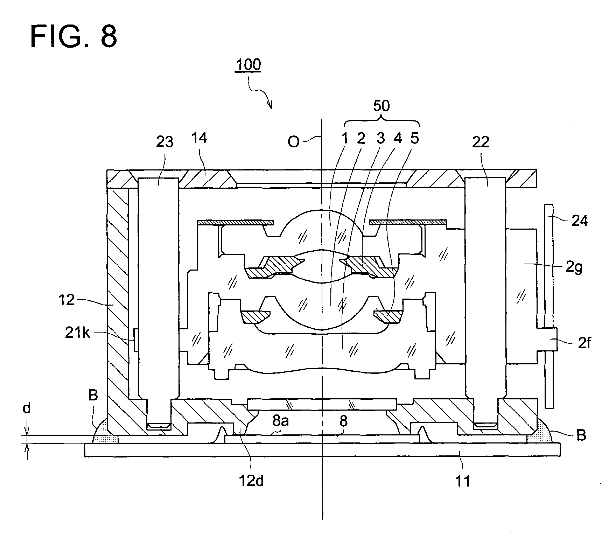

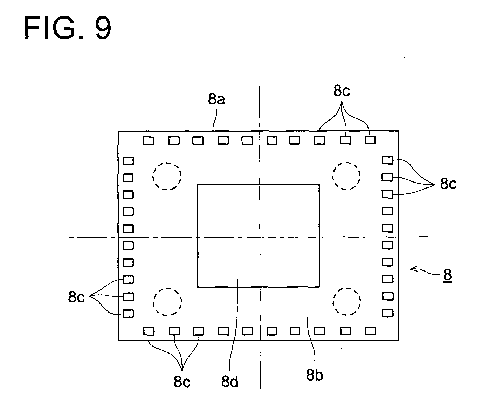

Fig. 9 is a top view of the image pickup element 8. In Fig. 9, 8a is a photo-electric conversion surface, 8b is a peripheral surface of the photo-electric conversion section, 8c are terminals for external connection, and 8d is a photo-electric conversion section. The photo-electric conversion section 8d on which pixels are two-dimensionally arranged is formed at the center of the photo-electric conversion surface 8a of the image pickup element 8. The peripheral surface 8b is formed around the photo-electric conversion section 8d. Image processing circuits are provided on the peripheral surface 8b and inside the image pickup element 8. Plural interconnection pads are provided near the outer edge of the peripheral surface 8b. The pads 8c which are the terminals for interconnection are electrically connected to specific circuits on the printed circuit board (referred to hereinafter as a substrate).

The mounting part 12d of the outer frame 12 is placed, as is shown by dotted lines in Fig. 9, so that it is in contact on the inner side of the pads 8c on the peripheral surface 8b of the image pickup element 8.

Fig. 4 is a cross-sectional view of the image pickup optical system section of the image pickup apparatus 100 showing the condition in which the image pickup element 8 is mounted in an inclined position on the printed circuit board 11. The same symbols as those in Fig. 3 have been used in this figure as well, and since the configuration is the same as that in Fig. 3, explanation of this figure will be given below only for the points of difference between these two figures.

Even when the image pickup element 8 is adhered in the inclined position (angle of inclination = α) to the printed circuit board 11 by the adhesive C, since the assembly has been made with the mounting part 12d in contact with the image pickup element 8, the outer frame 12 will also become inclined in accordance with the inclination of the image pickup element 8, it will be possible to maintain the guide shafts 22 and 23 supported by the outer frame 12 always perpendicular to the photo-electric conversion surface 8a of the image pickup element 8, and even the optical system support 21 and the image pickup optical system 50 that move along these guide shafts 22 and 23 can also be maintained always perpendicular to the photo-electric conversion surface 8a of the image pickup element 8.

In this manner, by assembling in a configuration in which the mounting part 12d of the outer frame 12 and the photo-electric conversion surface 8a of the image pickup element 8 are in contact with each other, since the outer frame 12 and the image pickup element 8 are in contact with each other at the mounting part 12d even when the image pickup element 8 and the printed circuit board 11 are adhered in an inclined position, it becomes possible to maintain the guide shafts 22 and 23 supported by the outer frame 12 and the photo-electric conversion surface 8a of the image pickup element 8 always perpendicular to each other.

Further, the infrared cut off filter 7 is fixed by an adhesive to the outer frame 12 opposite the photo-electric conversion surface 8a of the image pickup element 8.

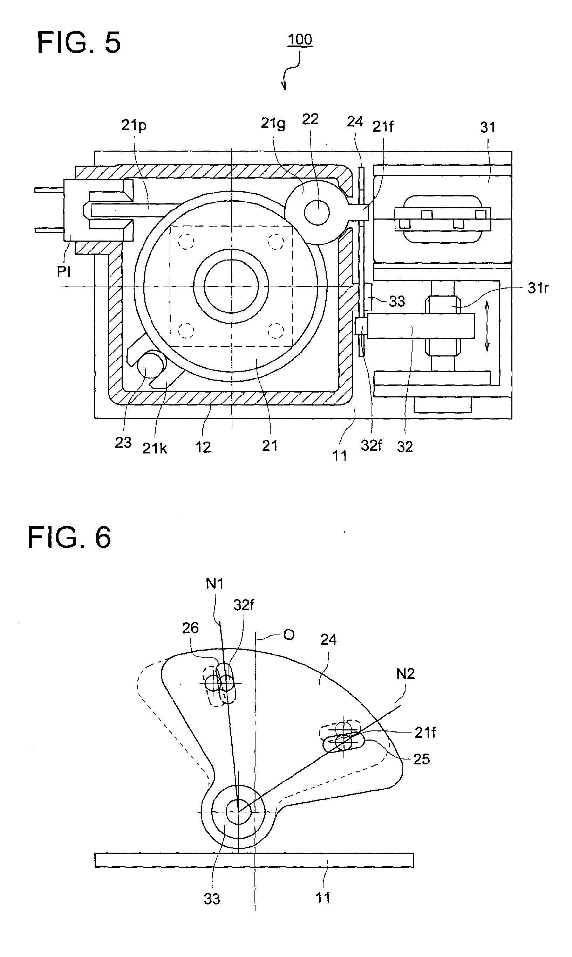

Fig. 5 is a front view showing schematically the interior of the image pickup apparatus 100 according to the present invention. This figure is the same as Fig. 2 except that the cover member 14 and the flexible printed circuit board FPC of the image pickup apparatus 100 shown in Figure have been removed and the view is as seen from the direction of the optical axis.

As is shown in Fig. 5, the shape of the outer frame 12 is roughly rectangular, the guide shafts 22 and 23 are placed at diagonally opposite positions of the outer frame 12, and even the guide tube 21g and the U-shaped mating part 21k formed integrally with the optical system support are placed at diagonally opposite positions. In addition, in the other diagonally opposite positions, the photo-interrupter PI for detecting the position of the optical system support 21 has been placed, and the shutter 21p formed integrally with the optical system support 21 can be inserted or removed between the light emitting and receiving parts of the photo-interrupter PI in accordance with the movement of the optical system support 21. This shutter 21p is mounted at a position so that it enters between the light emitting and receiving parts of the photo-interrupter PI when the image pickup optical system 50 is on the side of the image pickup element 8 and goes out of the position between the light emitting and receiving sections of the photo-interrupter PI when it moves towards the subject being photographed. In addition, a projection part 21f has been formed in the guide tube 21g and this projection part projects towards the side of the STM 31 from the cut section in the outer frame.

As is shown in the figure, the step motor STM 31 is placed so that its axis of rotation is twisted with respect to the optical axis of the image pickup optical system. In addition, a lead screw 31r is provided to STM 31 with its drive axis in the same direction as the axis of rotation of STM 31, and has its drive axis linked to the stepping motor 31 as the actuator. Further, it is also possible to have a configuration in which the axis of rotation of STM 31 and the drive axis of the lead screw 31r are in the same direction and the two are coupled by gear wheels, etc. The nut 32 is screwed onto this lead screw 31r. This nut 32 is also mated with a rotation stopper not shown in the figure and moves in the direction of the arrow shown in the figure due to the rotation of STM 31, that is, due to the rotation of the lead screw 31r, so that the positional relationship is twisted with respect to the optical axis.

In addition, a mating part 32f is formed on the nut 32, the mating part 32f mates with the mating plate 24 which is a drive direction changing mechanism, and the mating plate 24 simultaneously mates with the projection part 21 of the guide tube 21g. This drive direction changing mechanism constituted by the mating plate 24 is affixed to the wall of the outer frame 12 by the pin 33 in a free to rotate condition.

Further, in Fig. 5, the rectangle marked by broken lines indicates the position of the image pickup element 8 described in the explanation on Fig. 3, and the broken line circles indicate the positions of the mounting parts 12d formed in the outer frame 12 for mounting the image pickup element 8.

Fig. 6 is the plan view of the mating plate 24 which is a drive direction changing mechanism. Fig. 6 is the plan view of the mating plate 24 shown in Fig. 5 as seen from the STM 31 side. The position of the printed circuit board 11 and the optical axis O have been added to make the positional relationships easy to understand.

As is shown in Fig. 6, the mating plate 24 has been affixed to the shaft in a free to rotate condition by the pin 33, and the long hole part 25 mates with the projection part 21f and the long hole part 26 mates with the mating part 32f. The operations of the mating part 32f driven by STM 31 which is the actuator, the mating plate 24, and the projection part 21f formed on the guide tube 21g in this figure are explained below.

In Fig. 6, the mating part 32f is moved from the solid line position to the broken line position in a direction parallel to the printed circuit board 11 due to the rotation of the lead screw 31r (see Fig. 5). Along with this movement, the mating plate 24 rotates from the condition shown by solid lines to the condition shown by broken lines. As a result, even the long hole part 25 rotates from the condition shown by solid lines to the condition shown by broken lines, and the projection part 21f mating with this long hole part 25 moves, while being restricted by the guide shaft 22 (see Fig. 3 and Fig. 5), as shown in the figure in a direction parallel to the optical axis O (in the direction at right angles to the printed circuit board 11). Because of this movement, the optical system support 21, that is, the image pickup optical system 50, moves towards the subject being photographed. Further, if the lead screw 31r is made to rotate in the opposite direction, it is possible to make the reverse operation, that is, of returning from the condition indicated by broken lines to the condition indicated by solid lines. In other words, by controlling the direction and amount of rotation of the lead screw 31r, it is possible to make the image pickup optical system stop at any desired position.

Furthermore, either by making the setting so that the radius of rotation of the long hole part 26 is made large and the radius of rotation of the long hole part 25 is short, or by taking the inclination of the longer side of the long hole part 26 to have a value close to the inclination of the straight line N1 connecting the center of pin 33 and the center of the long hole 26 and making the inclination of the longer side of the long hole part 26 have a value with more inclination than the inclination of the straight line N2 connecting the center of pin 33 and the center of the long hole part 25, it is possible to transmit a shortened amount of drive by the drive shaft to the image pickup optical system, thus making it possible to drive the image pickup optical system with smaller steps than the step size of the drive on the drive shaft side, and hence it becomes possible to set the position of the image pickup optical system more accurately.

As has been explained above, by placing in a twisted position the optical axis of the image pickup optical system and the drive shaft driven by the actuator, it is possible to obtain an image pickup apparatus that has been made particularly thin in the direction of the optical axis of the image pickup apparatus.

In addition, even if the overall length of the actuator and the drive shaft is somewhat longer than the length of the image pickup apparatus in the direction of the optical axis, by placing it sideways in a twisted direction and by placing the actuator and the drive shaft in the same direction, it is possible to achieve thickness reduction and to place it within the desired shape. Furthermore, by placing a drive direction changing mechanism between the actuator and the image pickup optical system for changing the drive direction, it becomes possible to shorten the amount of drive by the actuator using the drive direction changing mechanism thereby making it possible to move the image pickup optical system in much smaller steps, and hence makes it possible to set the position of the image pickup optical system more accurately. Still further, by placing guide shafts that guide the movement of the image pickup optical system at diagonally opposite positions of the roughly rectangular outer frame that contains within it the image pickup element and the image pickup optical system, it becomes possible to increase the volume utilization efficiency and to enclose the configuration within the desired shape because the external shape does not become odd.

The outline of operations is described here when the image pickup apparatus configured as described above is incorporated within a portable terminal.

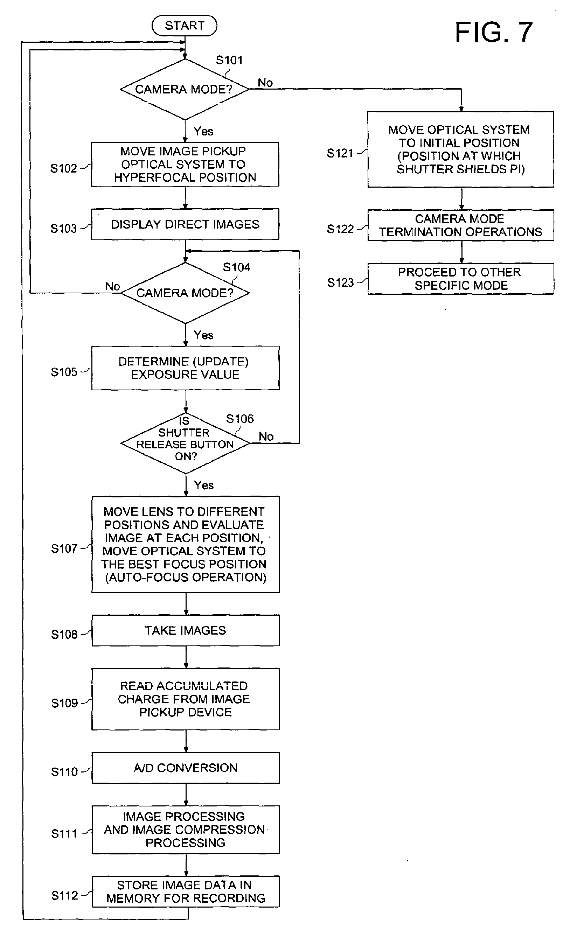

Fig. 7 is the outline flowchart of the operations when the portable terminal T containing the image pickup apparatus 100 is set to the camera mode among its several modes of operation.

In this flowchart, first the judgment is made as to whether or not the apparatus has been set in the camera mode (Step S101), and if it is judged that the unit has been set to the camera mode, the image pickup optical system is moved to the hyperfocal distance (Step S102).

This movement of the image pickup optical system to the hyperfocal position is done as described below.

When the image pickup apparatus 100 is not being used, the shutter 21p formed in the optical system support 21 shields the emission and reception of light in the photo-interrupter PI. First, the stepping motor STM 31 is driven, and the image pickup optical system 50, that is, the optical system support 21, is moved towards the subject to be photographed. When this is done, the photo-interrupter PI detects that the shutter 21p has gone away from the light emission and reception section. The image pickup optical system is set to the hyperfocal distance by taking this point at which this shutter 21p leaves the light emission and reception section as the starting point and driving the step motor STM 31 by a specific number of steps. A number that is different for each individual image pickup apparatus and that has been determined beforehand by measurements made during the manufacturing process is used for this specific number of steps. (See Fig. 4 and Fig. 5.)

Thereafter, the image pickup element is driven, and the obtained image is displayed successively on the display screen D (see Fig. 1) as the direct image, which passes through the optical system directly. Next, the camera mode is confirmed again (Step S104), and if the camera mode has been set, the operation is proceeded to Step S105 in which the exposure value at the time of actual image pickup is determined in preparation for image pickup the subject. After this, the apparatus waits for the button assigned with the shutter release function (for example, this can be any of the operation buttons P shown in Fig. 1) to become ON (Step S106). Until the button assigned with the shutter release function becomes ON, the steps S104 to S106 are repeated, and the exposure value during actual image is constantly updated. This is done in order to follow the changes in the various conditions of the subject being photographed until the actual image is taken.

When the button assigned with the shutter release function becomes ON, the image at the hyperfocal distance is read in, and also the image is read in after adjusting the focus to a shorter distance is taken in by activating the image pickup optical system, the images at the respective positions are evaluated, and the image pickup optical system is moved to the position at which the image with the best focus was obtained (Step S107). This completes the auto-focus operation. After this, the charge within the image pickup element is cleared, and charging is done again for actual taking images (Step S108). The exposure value determined in Step S105 is used as the exposure conditions at this time.

Thereafter, the charge accumulated in the image pickup element, that is, the image signal, is read out (Step S109), this image signal is A/D converted (Step S110), the data after this A/D conversion is subjected to image processing and the image data is subjected to data compression (Step S111). Next, the compressed image data is stored in the memory for recording the image data (Step S112). This completes the image pickup of one image.

After this, the operation returns to Step S101, the camera mode is confirmed again, and if the camera mode has been set, the operations proceed to Step S102, and if the camera mode has been released, the operations proceed to Step S121 of moving the image pickup optical system to the initial position, that is, moving the shutter 21p formed in the optical system supporting section 21 towards the image pickup element to the position at which the emission and reception of light in the photo-interrupter PI is cut off. Next, camera mode termination operations are made within the image pickup apparatus, such as that of the image pickup element, etc., (Step S122), and the operations proceeds to some other specific mode.

The above is the outline of operations when the portable terminal incorporated with an image pickup apparatus according to the present invention is set in the camera mode.

Fig. 8 is the cross-sectional view of another example of the image pickup optical system of the image pickup apparatus 100. This figure is one in which the functions of the optical system support 21 shown in Fig. 3 are formed integrally with the second lens 2, and only the points of difference from that of Fig. 3 are explained below.

As is shown in Fig. 8, the guide tube 2g that mates with the guide shaft 22, the projection part 2f that mates with the mating plate 24, and the U-shaped mating part 2k that mates with the guide shaft 23 are all formed integrally with the second lens 2. In other words, the guide tube 2g that is formed integrally with the second lens 2 has become the optical system support that supports the entire image pickup optical system.

Further, although not shown in the figure, in the second lens 2, a shutter with either an opaque paint coating or made of an opaque material is placed so that it can enter and leave the light emission and reception section of the photo-interrupter. In addition, the aperture 41 has been fixed to the first lens 1 by an adhesive.

In this manner, by forming integrally the guide tube 2g and the mating part 2k in the lens configuring the image pickup optical system, it is possible to eliminate intermediate components, thereby making it possible not only to achieve small size but also to adjust easily the parallelism of the guide shaft and the optical axis of the image pickup optical system.

## Claims

1. An image pickup apparatus comprising:
an image pickup optical system for conducting a subject light;
an optical system support for supporting the image pickup optical system;
an image pickup element for converting photoelectrically the subject light conducted by the image pickup optical system;
an outer frame for housing the optical system support; and
an optical system support guide, fixed to the outer frame, supporting the optical system support slidably along an optical axis,
wherein the outer frame is assembled to the image pickup element so that the outer frame is come into contact with the image pickup element.

2. The image pickup apparatus of claim 1 further comprising a substrate on which the image pickup element is fixed.

3. The image pickup apparatus of claim 1 further comprising a substrate,
wherein a gap is provided between the outer frame and the substrate and the outer frame is not in contact with the substrate.

4. The image pickup apparatus of claim 3,
wherein the outer frame and the substrate are fixed together with an adhesive.

5. The image pickup apparatus of claim 4,
wherein the adhesive is one of an ultraviolet curing adhesive, a heat curing adhesive, an ultraviolet and heat curing adhesive, and an ultraviolet and moisture curing adhesive.

6. The image pickup apparatus of claim 1,
wherein the optical system support is formed in one body with one of lenses which form the image pickup optical system.

7. A portable terminal comprising the image pickup apparatus of claim 1.
